# EUROPEAN PATENT SPECIFICATION

(11) **EP 1 936 293 B1**
(45) Date of publication and mention of the grant of the patent: **14.11.2012**
(21) Application number: 06797383.4
(22) Date of filing: 04.09.2006
(51) Int. Cl.: F24F 11/02, F04B 49/06, F25B 49/02

(54) **CONTROLLER FOR AIR CONDITIONER**
STEUERUNG FÜR KLIMAANLAGE
CONTRÔLEUR DE CLIMATISEUR

(30) Priority: 06.09.2005 JP 2005257306
(43) Date of publication of application: 25.06.2008
(73) Proprietor: Panasonic Corporation, Kadoma-shi Osaka 571-8501 (JP)
(72) Inventor: YAGI, Toshiaki, 2-1-61 Shiromi, Chuo-ku, Osaka, 540-6207 (JP); KOBAYASHI, Atsushi, 2-1-61 Shiromi, Chuo-ku, Osaka, 540-6207 (JP); YOSHIDA, Hisashi, 2-1-61 Shiromi, Chuo-ku, Osaka, 540-6207 (JP)
(74) Representative: Eisenführ, Speiser & Partner
(86) International application number: PCT/JP2006/317460
(87) International publication number: WO 2007/029646

(56) References cited:
- JP-A- 2003 152 250
- US-A- 3 890 798
- US-A- 6 065 298
- ASHRAE: "Heating, Ventilating and Air-Conditioning SYSTEMS AND EQUIPMENT" 2004, ASHRAE , Atlanta , XP002601669 * page 34.3 *

## Description

### FIELD OF THE INVENTION

The present invention relates to technology used in an air conditioner control device to prevent compressor damage, and relates more particularly to technology for preventing the compressor from operating in reverse after recovering from a momentary power outage.

### BACKGROUND OF THE INVENTION

In an air conditioner compressor that has an internal single-phase inductive motor driven by a single-phase power supply, a rotating field is created by applying the power supply voltage to the primary coil, inserting a capacitor in series with the supply voltage, and advancing the phase of the voltage supplied to the secondary coil. The resulting rotating field is incomplete compared with the field in a three-phase inductive motor driven by a three-phase AC power supply, and the output torque is uneven. In general, when a power outage occurs during the refrigerant compression cycle, the reaction from the compressed refrigerant causes the compressor to start turning in reverse. When the power supply returns after a short power outage, the forward torque of the single-phase induction motor in the compressor is weak because the rotating magnetic field is incomplete, and the compressor continues to run in reverse. When this happens, the coil temperature of the compressor may rise abnormally, leading to equipment failure.

EP Patent Application Publication No.0933604 A2 (corresponding to Japanese Laid-open Patent Publication No. H11-210638) teaches an arrangement for preventing this reversing of the compressor when a power outage occurs. More specifically, a power supply monitor monitors the supply power state and outputs a reset signal to the control device when the supply power is interrupted. This reset signal causes the control device to stop the compressor to prevent the compressor from reversing.

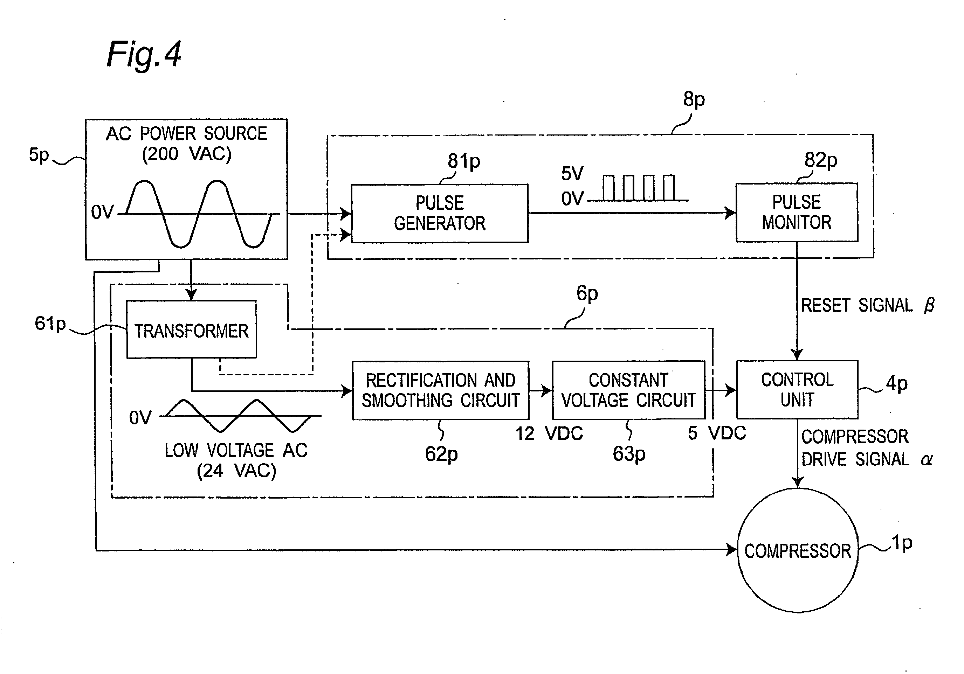

FIG. 4 is a block diagram of the control device in the conventional air conditioner described in EP Patent Application Publication No.0933604 A2. As shown in the figure, the control device has a control unit 4p that controls the compressor 1 p, an AC power source 5p, a power supply converter 6p, and a supply power monitor unit 8p.

The power supply converter 6p includes a transformer 61 p, a rectification and smoothing circuit 62p, and a constant voltage circuit 63p, converts the power supplied from the AC power source 5p to direct current, stabilizes the voltage, and supplies a DC voltage to the control unit 4p.

The supply power monitor unit 8p includes a pulse generator 81p and a pulse monitor 82p, monitors the state of the AC power source 5p, and outputs a reset signal β to the control unit 4p if the power output from the AC power source 5p stops.

The pulse generator 81p generates a pulse synchronized to the current frequency of the AC power source 5p by, for example, using a photocoupler to generate a pulse stream with 1/2 the period of the supply frequency from the AC power source 5p. When a power failure occurs, the power output from the AC power source 5p is interrupted and the pulse signal from the pulse generator 81p dies.

The pulse monitor 82p monitors the power supply from the AC power source 5p by monitoring the pulse train output from the pulse generator 81 p, and outputs the reset signal β to the control unit 4p when a power failure occurs and pulse output from the pulse generator 81p stops.

When a power failure occurs, whether a short power failure of several 10 ms to several 100 ms or a long power failure of greater than several 100 ms, the supply of power from the AC power source 5p to the compressor 1p stops simultaneously to the loss of power. If the power loss occurs during the refrigerant compression cycle, the compressed refrigerant produces a reaction in the opposite direction as the direction of normal rotation, causing the compressor 1p to reverse. In the case of a long-term power failure the pulse monitor 82p of the supply power monitor unit 8p outputs the reset signal β to the control unit 4p, and the control unit 4p is reset. Resetting kills the drive signal α output from the control unit 4p to the compressor 1p, the compressor 1p therefore does not continue reversing, and stops. If the power failure continues after the reset signal β is output from the supply power monitor unit 8p, the power supply from the constant voltage circuit 63p of the power supply converter 6p to the control unit 4p is cut off, and the air conditioner stops.

In other words, if the power supply from the constant voltage circuit 63p of the power supply converter 6p continues, the control unit 4p is unconditionally reset and the compressor 1p is stopped to prevent reversing.

When there is an extremely short power outage of less than several 10 ms with the related art described above, the supply of power from the AC power source 5p to the compressor 1p stops simultaneously to the loss of power. If the power loss occurs during the refrigerant compression cycle, the compressor is affected by the reaction from the compressed refrigerant in the opposite direction as normal rotation. The compressor will not reverse if the compressor is turning normally due to inertia before reversing starts, but reversing has been confirmed to start even with an extremely short loss of power depending on the timing and the refrigeration cycle. In addition, because the pulse generator 81p of the supply power monitor unit 8p does not react in a time of less than 1/2 the power supply frequency, the reset signal β is not output from the pulse monitor 82p to the control unit 4p in this time, and the control unit 4p therefore does not stop the compressor 1p. If the power supply from the AC power source 5p returns in this time, the compressor 1p may therefore continue to turn in reverse.

The US patent US 6, 065, 298 discloses a control device for an air conditioner according to the preamble of claim 1.

The US patent US 3,890,798 describes a refrigerator control apparatus comprising an electronic timer including first, second and third counters in which clock signals are applied to the input stage of the first counter and the output from the first counter is applied to the input stages of the second and third counters. The overload time of a compressor is controlled by a timing signal picked up from an intermediate stage of the first counter. The suspension time of the compressor is controlled by a timing signal picked up from the output stage of the second counter. The defrosting suspension time is controlled by a timing signal picked up from the output stage of the third counter. And the output pulses of the first counter are counted by the third counter only during the running of the compressor.

### DISCLOSURE OF THE INVENTION

The present invention is directed to solving the foregoing problem by reliably preventing the compressor from reversing when there is an extremely short power failure of several 10 ms or less, and thereby preventing compressor damage.

To achieve the foregoing object, an air conditioner control device is provided according to claim 1.

The operation of the invention is described next.
When a power failure occurs, the power supply to the compressor stops simultaneously to the loss of power. If the power failure occurs during a refrigerant compression cycle, the reaction from the compressed refrigerant in the opposite direction as the normal direction causes the compressor to reverse. However, the starting current that flows to the compressor when power returns after the power failure is detected by the current detection unit, and if the control unit determines that the detected current is greater than or equal to a prescribed level for a prescribed time or longer, the control unit turns the electromagnetic switch off. The current supply to the compressor is thus interrupted and the compressor is prevented from operating in reverse.

The starting current also flows to the compressor when the compressor is started and when the 4-way valve switches for defrosting control in the heating mode. However, the control unit does not detect the output from the current detection unit for a prescribed time after outputting the starting or switching signal, can therefore differentiate the starting current after a power failure, and can prevent malfunctioning.

The air conditioner control device according to another aspect of the invention does not turn the electromagnetic switch on for a prescribed third time after once turning the electromagnetic switch off.

By thus applying control to not restart the compressor until the pressure inside the compressor is balanced again when the power returns after the current supply to the compressor is interrupted by a power failure, the compressor can start stably when the compressor restarts.

The air conditioner control device according to another aspect of the invention does not turn the electromagnetic switch on for a third prescribed time immediately after the power turns on.

Another aspect of the invention is a control device for an air conditioner according to claim 4.

The invention reliably prevents the compressor from reversing when there is a power supply failure, including an extremely short power failure of several 10 ms or less, and thus prevents compressor damage.
Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a block diagram of an air conditioner control device according to a preferred embodiment of the invention.
FIG. 2 is a timing chart of power failure in a preferred embodiment of the invention.
FIG. 3 is a timing chart of the normal starting operation in a preferred embodiment of the invention.
FIG. 4 is a block diagram of an air conditioner control device according to the related art.

### DETAILED DESCRIPTION OF THE PREFERRED EMBODIMENTS

A preferred embodiment of the present invention is described below with reference to the accompanying figures.
A first aspect of the invention has an electromagnetic switch that switches the power supply to the compressor on/off, a 4-way valve that switches between heating and cooling modes, a control unit, and a current detection unit that detects the compressor current. The control unit outputs an on/off signal to the electromagnetic switch, outputs an on/off signal to the 4-way valve, and thus controls the on/off state of the electromagnetic switch and the 4-way valve.
When control unit detects that the output from the current detection unit is greater than or equal to a prescribed value continuously for a first prescribed time or longer, the control unit applies a first control that turns the electromagnetic switch off, but does not apply this first control during a second prescribed time after outputting the on signal to the electromagnetic switch or outputting the on/off signal to the 4-way valve. As a result, if the control unit detects that the starting current flowing to the compressor detected by the current detection unit when power is restored after a power failure is greater than or equal to a prescribed value continuously for a prescribed time or longer, the electromagnetic switch is turned off. Reversing is prevented by thus blocking the current supply to the compressor.

Starting current flows to the compressor when starting the compressor and when switching the 4-way valve for defrosting control in the heater mode. However, by not detecting the output from the current detection unit for a prescribed time after the control unit starts the compressor or outputs the switching signal, the control unit can differentiate the starting current when power returns after a power failure, and malfunctioning can be prevented.

In a second aspect of the invention, once control of the electromagnetic switch according to the first aspect of the invention described above turns off, it does not turn on again for a prescribed time. When power is restored after the current supply to the compressor is interrupted by a power failure, this aspect of the invention prevents restarting the compressor until the pressure inside the compressor is rebalanced and thus enables the compressor to start stably when restarting.

A further possibility is that control of the electromagnetic switch according to the first aspect of the invention described above does not turn the electromagnetic switch on for a prescribed time immediately after the power turns on. This prevents the compressor from starting suddenly and locking as a result of the electromagnetic switch turning on simultaneously to the main power supply turning on after a power failure of a certain length.

Alternatively an exemplary the air conditioner control device can control the current supply to the compressor and has a switching means, a refrigerant path switching means, a current detection means, and a control means.
The switching means switches between an on state in which the current supply is on and an off state in which the current supply is off. The refrigerant path switching means switches the refrigerant circulation path in the air conditioner. The current detection means generates an overcurrent signal when the level of the supplied AC current is greater than or equal to a prescribed level. The control means controls switching the switching means between the on state and the off state based on a prescribed first condition, and controls the refrigerant path switching means according to a predetermined second condition.
When the overcurrent signal continues for a predetermined overcurrent period, the control means applies a first control that turns the switching means off. The control means applies a second control that is different from the first control to hold the switching means in the on state even if the overcurrent signal is output within a first prescribed time from when the switching means turns on or a second prescribed time from when the refrigerant path switching means switches.

Alternatively the switching means can remain off for a third prescribed time from when the switching means turned off.

A preferred embodiment of the invention is described next with reference to the accompanying figures. Note that the numbers used below are used by way of example only to describe the invention in detail, and the invention is not limited to these numbers. In addition, logic levels denoted high and low below are used by way of example only to describe the invention in detail, and the invention is not limited to these logic levels.

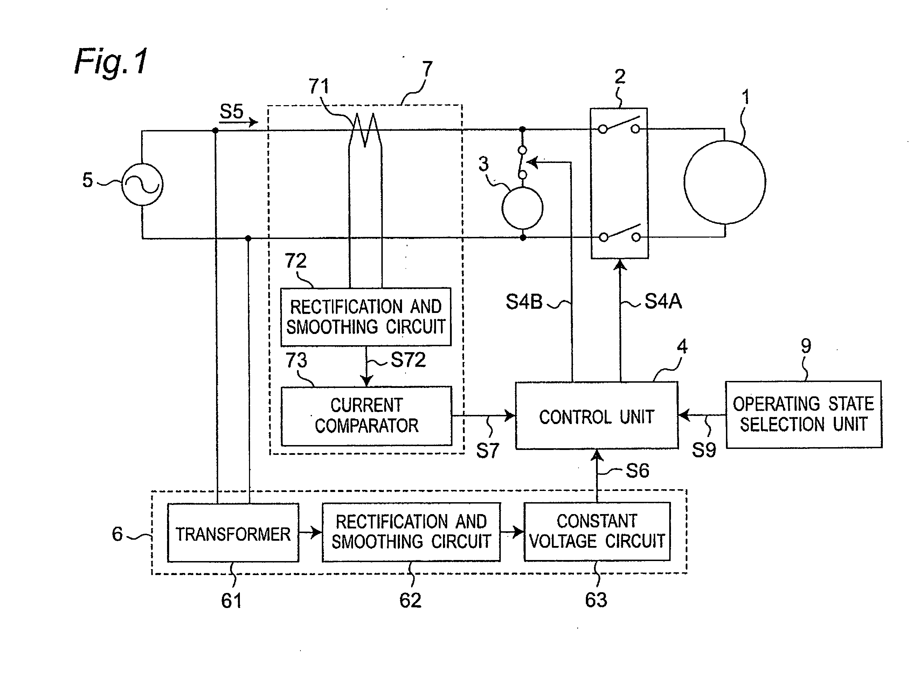

FIG. 1 is a block diagram of the air conditioner control device according to a preferred embodiment of the invention.

The air conditioner control device according to this embodiment of the invention is a device for controlling the current supply from the AC power source 5 to the compressor 1, and has the components described below.
First is an electromagnetic switch 2 that switches between an on state in which the current supply to the compressor 1 is on, and an off state in which the current supply is off.
Second is a 4-way valve 3 that switches the circulation path of the refrigerant in the air conditioner.
Third is a current detection unit 7 that outputs an overcurrent signal S7 when the level of the supplied AC current S5 is greater than or equal to a prescribed setting.
Fourth is a control unit 4 that switches the electromagnetic switch 2 between the on state and the off state based on a predetermined first condition, and controls the 4-way valve 3 based on a prescribed second condition. When the overcurrent signal S7 continues for a predetermined overcurrent period, the control unit 4 applies a first control that turns the electromagnetic switch 2 off. For a prescribed time T after the electromagnetic switch 2 turns on, and for a prescribed time from when the 4-way valve 3 switches, the control unit 4 applies a second control that is different from the first control and holds the electromagnetic switch 2 on even if the overcurrent signal S7 is input from the current detection unit 7.
Fifth is a power supply converter 6 that converts the AC supply from the AC power source 5 to direct current and supplies the direct current to the control unit 4.

The electromagnetic switch 2 electromagnetically turns the power supply on and off, but could be a semiconductor switch instead of an electromagnetic switch. The electromagnetic switch 2 can therefore be simply called a switch.
The 4-way valve 3 is a valve for switching the refrigerant circulation path according to the cooling, heating, defrosting, and dehumidification operating modes and various combinations thereof, is not limited to a 4-way valve, and can be any arrangement capable of switching the refrigerant circulation path. The 4-way valve 3 can also be referred to as a refrigerant path switching means.

The power supply converter 6 converts the AC power from the AC power source 5 to direct current, stabilizes the voltage, and supplies DC supply voltage S6 to the control unit 4. The power supply converter 6 includes a transformer 61, a rectification and smoothing circuit 62, and a constant voltage circuit 63.
The transformer 61 converts the AC supply from the AC power source 5 to a low AC supply voltage of 24 V, for example.
The rectification and smoothing circuit 62 full-wave rectifies the low voltage AC supply from the transformer 61 using a bridge diode, for example, smooths the current using an electrolytic capacitor, and outputs a 12-V DC supply.
The constant voltage circuit 63 stabilizes the DC supply from the rectification and smoothing circuit 62 using a power supply regulator, for example, and outputs a DC supply voltage S6, which in this embodiment of the invention is low voltage current of 5 V, for example. By using an electrolytic smoothing capacitor, the power supply converter 6 can supply the DC supply voltage S6 to the control unit 4 for several hundred milliseconds when a power failure occurs. As a result, the period starting from when the power failure occurs and ending when the DC supply voltage S6 drops sharply is referred to as a "power failure current supply period."

The current detection unit 7 detects the AC current S5 supplied from the AC power source 5 to the compressor 1, and generates and outputs the overcurrent signal S7 to the control unit 4 if the AC current S5 is greater than or equal to a predetermined level. The current detection unit 7 includes a current detector 71, a rectification and smoothing circuit 72, and a current comparator 73.

The current detector 71 is a current transformer, for example, and generates an AC output proportional to the AC current S5, The rectification and smoothing circuit 72 rectifies and smooths this AC output to generate current detection signal S72.
The current comparator 73 is a comparator circuit, for example, that compares the current detection signal S72 with an overcurrent limit I1 equal to the overcurrent, and outputs the overcurrent signal S7 if current detection signal S72 is greater than or equal to the overcurrent limit I1. The overcurrent signal S7 is thus a HIGH logic level.
The current detection unit 7 outputs the overcurrent signal S7 to the control unit 4.

The operating state selection unit 9 sets the operating state of the air conditioner and outputs operating state signal S9. The operating state selection unit 9 includes, for example, a remote control operating unit and a remote control receiver, and can set various conditions in the operating state signal S9, such as the temperature setting, the fan speed and direction, the on/off state, and timer start and stop times. The operating state selection unit 9 can also set the operating mode, such as heat, cool, defrost, and dehumidify, in the operating state signal S9. The operating state selection unit 9 also includes a thermometer and can set temperature measurement information such as the room temperature in the operating state signal S9.

The control unit 4 includes a microprocessor, and controls the entire air conditioner in addition to controlling the electromagnetic switch 2 and 4-way valve 3 as described above. The function of the current comparator 73 in the current detection unit 7 can be achieved by the microprocessor of the control unit 4. The control unit 4 generates electromagnetic switch control signal S4A for controlling switching the electromagnetic switch 2 between the on state and off state based on the overcurrent signal S7 and the operating state signal S9. Of the information contained in the operating state signal S9 described above, the control unit 4 calculates the timing for turning the current supply to the compressor 1 on and off based particularly on the temperature setting, the temperature measurement information, the on/off state of the power supply, and the timer start/stop times. This calculation also accounts for power consumption, the time to reach the set temperature, and the tolerance range for the set temperature. The control unit 4 sets the electromagnetic switch control signal S4A HIGH or LOW based on these conditions to control the on/off state of the electromagnetic switch 2.

The control unit 4 also generates a 4-way valve control signal S4B based on the operating state signal S9. The control unit 4 determines the refrigerant circulation path pattern of the air conditioner based on information in the operating state signal S9, particularly the heat, cool, defrost, and dehumidify operating mode information. Based on these conditions, the control unit 4 sets the 4-way valve control signal S4B to control the 4-way valve 3.

The operation of the air conditioner control device described above is described next.
When a power failure occurs, the supply of power from the AC power source 5 to the compressor 1 stops simultaneously with the loss of power.
If the power failure occurs during the refrigerant compression cycle, the reaction from the compressed refrigerant in the opposite direction as the normal direction causes the compressor 1 to reverse.
If the power outage lasts longer than the power failure current supply period during which the power supply converter 6 can supply the DC supply voltage S6 to the control unit 4, the control unit 4 is reset by interruption of the DC supply voltage S6.
When the control unit 4 is reset the electromagnetic switch control signal S4A goes LOW, the electromagnetic switch 2 turns off, and the compressor 1 stops even if it is turning in reverse. More specifically, if the power outage lasts longer than the power failure current supply period, the control unit 4 turns the electromagnetic switch 2 off unconditionally, irrespective of the overcurrent signal S7 and operating state signal S9 levels.

If the power outage is shorter than the power failure current supply period during which the power supply converter 6 can supply the DC supply voltage S6 to the control unit 4, the control unit 4 will be in the operating state when the power outage ends. The state of the compressor 1 when the power outage ends depends upon the timing of the power failure and the length of the power outage. The compressor 1 will either be turning in reverse due to the reaction from the compressed refrigerant in the opposite direction as the normal direction, turning in the normal direction due to inertia, or stopped. In all cases, however, the electromagnetic switch control signal S4A will be HIGH when the power outage ends, and a starting current equal to the motor lock current of the compressor 1 will flow in order to restart the compressor 1. Because this starting current is several times higher than the normal operating current, the presence of an overcurrent can be detected by setting an appropriate overcurrent limit. Furthermore, while the compressor 1 normally stops in several milliseconds when the current supply is interrupted, the starting current of the compressor 1 flows even if the power outage is extremely short, and can be detected even if the power outage is extremely short.

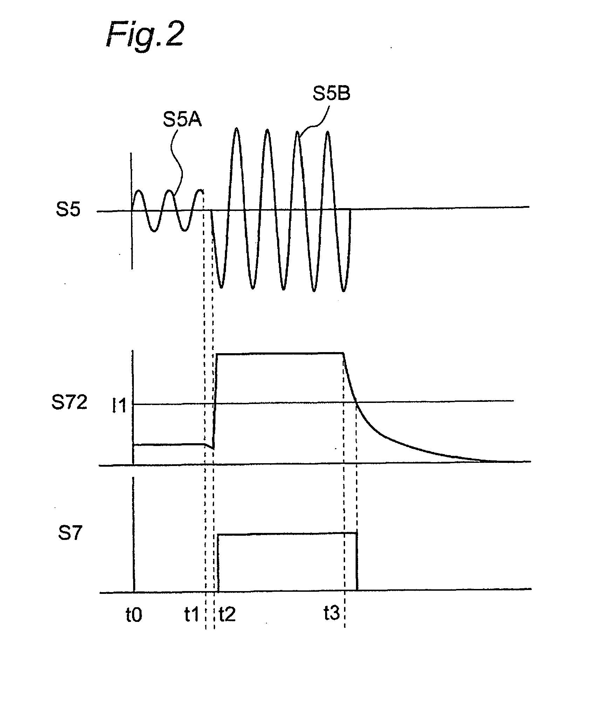

The timing chart of a power outage in FIG. 2 shows the waveform of the AC current S5 to the compressor 1, the waveform of the current detection signal S72 output from the rectification and smoothing circuit 72 according to the AC current S5, and the overcurrent signal S7 output from the current comparator 73.
Operation is normal in the period from time t0 to time t1, and a current detection signal S72 proportional to the AC current S5 is output by the rectification and smoothing circuit 72. The current comparator 73 compares the current detection signal S72 with the overcurrent limit I1, and outputs the overcurrent signal S7 LOW (normal output. If a power failure occurs at time t1 and power returns at time t2, starting current S5B starts flowing when power returns at time t2 and continues for several milliseconds to several seconds depending upon the condition of the compressor 1. More specifically, the level of the AC current S5 rises to or above a predetermined level substantially from time t2, and the current detection signal S72 goes to the overcurrent limit I1 or above. This causes the overcurrent signal S7 to go HIGH and the current detection unit 7 generates overcurrent signal S7. At time t3 the control unit 4 receives the overcurrent signal S7 output and sets the electromagnetic switch control signal S4A LOW to turn the electromagnetic switch 2 off. Power supply to the compressor 1 therefore stops.
The period from when the overcurrent signal S7 is generated until the control unit 4 turns the electromagnetic switch 2 off, which is substantially the period from time t2 to time t3, is called the overcurrent period. This overcurrent period is set to a short period within the range that will not result in a malfunction even if the overcurrent signal S7 spikes to a high level due to external noise, for example. If separate measures are taken to prevent malfunctioning in such cases, the overcurrent period can be substantially zero.

The control unit 4 is controlled by an internal timer to not turn on for a prescribed time after the electromagnetic switch 2 is turned off. This period for which turning on is prohibited is set so that there is sufficient time for the internal pressure of the compressor 1 to return to equilibrium. This enables the compressor 1 to start stably when it restarts.

Operation when the compressor 1 starts or restarts is described next.

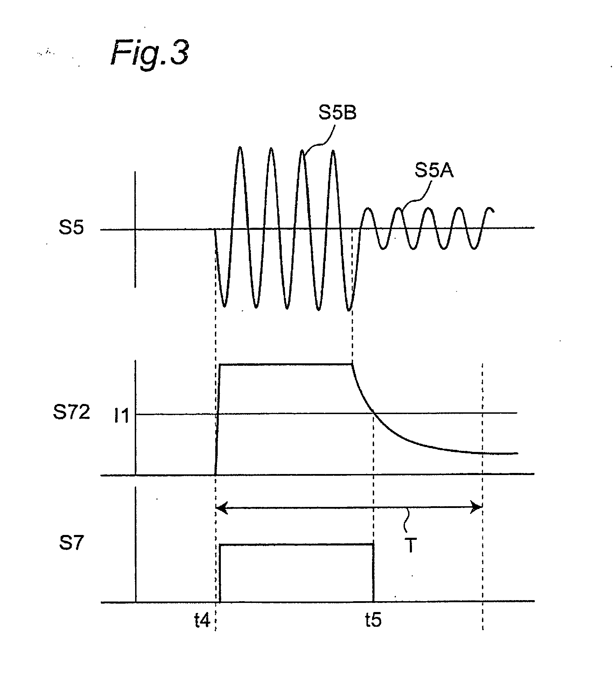

The timing chart for the normal starting operation shown in FIG. 3 shows the waveforms when the electromagnetic switch control signal S4A from the control unit 4 goes HIGH and the electromagnetic switch 2 turns on. When the electromagnetic switch 2 turns on at time t4, the starting current S5B flows to the compressor 1. The current detection signal S72 goes to overcurrent limit 11 or above, and overcurrent signal S7 goes HIGH. When the pressure inside the compressor 1 is balanced, the starting current S5B flows for less than several seconds.
If the starting current S5B stops and the current detection signal S72 goes to or below the overcurrent limit I1 at time t5, the overcurrent signal S7 is HIGH for the period from substantially time t4 to time t5. The current detection unit 7 outputs the overcurrent signal S7 for the overcurrent period from substantially time t4 (the period from substantially time t2 to time t3 in FIG. 2).
This overcurrent period is normally shorter than the period from time t4 to time t5. The control unit 4 is configured to not respond to the overcurrent signal S7 for a predetermined period T from time t4 at which the electromagnetic switch control signal S4A goes HIGH and the electromagnetic switch 2 turns on.
As a result, if T > (t5 - t4) as shown in FIG. 3, malfunctioning can be prevented during normal startup without turning the electromagnetic switch 2 off and interrupting current supply to the compressor 1.

When the 4-way valve 3 is switched for defrost control in the heating mode, current comparable to the starting current S5B flows to the compressor 1 because of the sudden load change in the refrigeration cycle. In this case the 4-way valve control signal S4B to the 4-way valve 3 is output from the control unit 4. The control unit 4 is also configured to not respond to the overcurrent signal S7 for a predetermined period after the 4-way valve control signal S4B is output to the 4-way valve 3. As a result, the electromagnetic switch 2 will not turn off and current supply to the compressor 1 will not be interrupted if the overcurrent signal S7 is output from the current detection unit 7, and malfunctioning is prevented.

The air conditioner control device according to the present invention can thus reliably prevent the compressor 1 from turning in reverse and can prevent compressor 1 damage when a power failure occurs and when an extremely short power failure of less than several 10 ms occurs, and can therefore be used in refrigerators and in showcase refrigerators and freezers.
The invention being thus described, it will be obvious that it may be varied in many ways. Such variations are not to be regarded as a departure from the scope of the invention, which is solely limited by the appended claims.

## Claims

1. A control device for an air conditioner, comprising:
an electromagnetic switch (2) that switches the power supply to a compressor (1) on/off;
a 4-way valve (3) that switches between heating and cooling modes;
a control unit (4) that outputs an on/off signal to said electromagnetic switch (2) and outputs a mode signal to said 4-way valve to control the on/off state of said electromagnetic switch (2) and the mode of said 4-way valve (3); and
a current detection unit (7) that detects the compressor current;
wherein said control unit (4) applies a first control that turns said electromagnetic switch (2) off when said control unit (4) detects that the output from said current detection unit (7) is greater than or equal to a prescribed value continuously for a first prescribed time or longer,
**characterized in that**
said control unit (4) does not apply this first control during a second prescribed time after outputting the on signal to said electromagnetic switch (2) or outputting the mode signal to said 4-way valve (3).

2. The control device for an air conditioner described in claim 1, wherein:
said control unit (4) does not turn said electromagnetic switch (2) on for a third prescribed time after once turning said electromagnetic switch (2) off.

3. The control device for an air conditioner described in claim 1, wherein:
said control unit (4) does not turn said electromagnetic switch (2) on for a third prescribed time immediately after the power turns on.

4. The control device for an air conditioner described in one of the previous claims, wherein:
said control unit (4) applies a second control that is different from the first control to hold said electromagnetic switch (2) in the on state during the second prescribed time after outputting the on signal to said electromagnetic switch (2) or outputting the mode signal to said 4-way valve (3).

## Patentansprüche

1. Steuervorrichtung für eine Klimaanlage, enthaltend:
einen elektromagnetischen Schalter (2), der die Stromversorgung für einen Kompressor (1) ein-/ausschaltet;
ein Vier-Wege-Ventil (3), das zwischen Heiz- und Kühl-Modi umschaltet;
eine Steuereinheit (4), die ein Ein/Aus-Signal an den elektromagnetischen Schalter ausgibt und ein Modus-Signal an das Vier-Wege-Ventil ausgibt, um den Ein/Aus-Zustand des elektromagnetischen Schalters (2) und den Modus des Vier-Wege-Ventils (3) zu steuern; und
eine Stromerfassungseinheit (7), die den Kompressorstrom erfasst;
wobei die Steuereinheit (4) eine erste Steuerung anwendet, die den elektromagnetischen Schalter (2) ausschaltet, wenn die Steuereinheit (4) erfasst, dass das Ausgangssignal von der Stromerfassungseinheit (7) kontinuierlich für eine erste vorgeschriebene Zeitspanne oder länger größer oder gleich einem vorgeschriebenen Wert ist,
**dadurch gekennzeichnet, dass**
die Steuereinheit (4) diese erste Steuerung während einer zweiten vorgeschriebenen Zeitspanne nach dem Ausgeben des Ein-Signals an den elektromagnetischen Schalter (2) oder dem Ausgeben des Modus-Signals an das Vier-Wege-Ventil (3) nicht anwendet.

2. Steuervorrichtung für eine Klimaanlage nach Anspruch 1, wobei:
die Steuereinheit (4) den elektromagnetischen Schalter (2) für eine dritte vorgeschriebenen Zeitspanne, nachdem einmal der elektromagnetische Schalter (2) ausgeschaltet worden ist, nicht einschaltet.

3. Steuervorrichtung für eine Klimaanlage nach Anspruch 1, wobei:
die Steuereinheit (4) den elektromagnetischen Schalter (2) für eine dritte vorgeschriebene Zeitspanne unmittelbar nach dem Einschalten der Stromversorgung nicht einschaltet.

4. Steuervorrichtung für eine Klimaanlage nach einem der vorangehenden Ansprüche, wobei:
die Steuereinheit (4) eine zweite Steuerung anwendet, die verschieden ist von der ersten Steuerung, um den elektromagnetischen Schalter (2) während der zweiten vorgeschriebenen Zeitspanne nach dem Ausgeben des Ein-Signals an den elektromagnetischen Schalter (2) oder dem Ausgeben des Modus-Signals an das vier-Wege-Ventil (3) im Ein-Zustand zu halten.

## Revendications

1. Dispositif de commande pour un climatiseur, comprenant :
un interrupteur électromagnétique (2) qui active et désactive l'alimentation électrique à un compresseur (1) ;
une soupape à 4 voies (3) qui commute entre des modes de chauffage et de refroidissement ;
une unité de commande (4) qui délivre en sortie un signal de marche/arrêt audit interrupteur électromagnétique (2) et délivre en sortie un signal de mode à ladite soupape à 4 voies pour commander l'état de marche/arrêt dudit interrupteur électromagnétique (2) et le mode de ladite soupape à 4 voies (3) ; et
une unité (7) de détection de courant qui détecte le courant du compresseur ;
où ladite unité de commande (4) applique une première commande qui ferme ledit interrupteur électromagnétique (2) lorsque ladite unité de commande (4) détecte que la sortie provenant de ladite unité (7) de détection de courant est supérieure ou égale en continu à une valeur prescrite pendant une première durée prescrite ou plus,
**caractérisé en ce que**
ladite unité de commande (4) n'applique pas cette première commande pendant une deuxième durée prescrite après la délivrance du signal de marche audit interrupteur électromagnétique (2) ou la délivrance du signal de mode à ladite soupape à 4 voies (3).

2. Dispositif de commande pour un climatiseur décrit dans la revendication 1, dans lequel :
ladite unité de commande (4) n'allume pas ledit interrupteur électromagnétique (2) pendant une durée prescrite après la fermeture dudit interrupteur électromagnétique (2).

3. Dispositif de commande pour un climatiseur décrit dans la revendication 1, dans lequel :
ladite unité de commande (4) n'allume pas ledit interrupteur électromagnétique (2) pendant une troisième durée prescrite immédiatement après la mise sous tension.

4. Dispositif de commande pour un climatiseur décrit dans l'une des revendications précédentes, dans lequel :
ladite unité de commande (4) applique une deuxième commande qui est différente de la première commande pour maintenir ledit interrupteur électromagnétique (2) à l'état de marche pendant la deuxième durée prescrite après la délivrance du signal de marche audit interrupteur électromagnétique (2) ou la délivrance du signal de mode à ladite soupape à 4 voies (3).
